(19) Europäisches Patentamt / European Patent Office / Office européen des brevets

(11) **EP 4 270 522 A1**

(12) **EUROPEAN PATENT APPLICATION**
published in accordance with Art. 153(4) EPC

(43) Date of publication:
01.11.2023 Bulletin 2023/44

(21) Application number: 21911053.3

(22) Date of filing: 24.12.2021

(51) International Patent Classification (IPC):
$H01M\ 4/13$ (2010.01)     $H01M\ 4/133$ (2010.01)
$H01M\ 4/134$ (2010.01)    $H01M\ 4/136$ (2010.01)
$H01M\ 4/36$ (2006.01)     $H01M\ 4/587$ (2010.01)
$H01M\ 4/62$ (2006.01)

(52) Cooperative Patent Classification (CPC):
H01M 4/13; H01M 4/133; H01M 4/134;
H01M 4/136; H01M 4/36; H01M 4/587; H01M 4/62;
Y02E 60/10

(86) International application number:
PCT/JP2021/048200

(87) International publication number:
WO 2022/138916 (30.06.2022 Gazette 2022/26)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 24.12.2020 JP 2020215633

(71) Applicant: Panasonic Intellectual Property
Management Co., Ltd.
Osaka-shi, Osaka 540-6207 (JP)

(72) Inventors:
• INOUE, Kaoru
  Kadoma-shi, Osaka 571-0057 (JP)
• SATO, Yosuke
  Kadoma-shi, Osaka 571-0057 (JP)
• NAKURA, Kensuke
  Kadoma-shi, Osaka 571-0057 (JP)
• TANIGUCHI, Akihiro
  Kadoma-shi, Osaka 571-0057 (JP)

(74) Representative: Novagraaf International SA
Chemin de l'Echo 3
1213 Onex, Geneva (CH)

(54) **NEGATIVE ELECTRODE FOR NONAQUEOUS ELECTROLYTE SECONDARY BATTERY, AND NONAQUEOUS ELECTROLYTE SECONDARY BATTERY**

(57) A negative electrode for a nonaqueous electrolyte secondary battery, according to one embodiment of the present invention, is provided with a negative electrode core and a negative electrode mixture layer provided on the surface of the negative electrode core. The negative electrode mixture layer has a first layer that includes: at least one of at least one kind of metal element selected from Si, Sn, Sb, Mg, and Ge, and a compound containing said metal element; at least one of multi-walled carbon nanotubes and single-walled carbon nanotubes; and a binding agent. The negative electrode mixture layer also has a second layer that includes graphite A with a particle fracture strength of 10-35 MPa. The porosity of the first layer is preferably 50-65%.

Figure 2

**Description**

TECHNICAL FIELD

The present disclosure generally relates to a negative electrode for a non-aqueous electrolyte secondary battery, and a non-aqueous electrolyte secondary battery using the negative electrode.

BACKGROUND ART

A metal element that forms an alloy with lithium, such as Si and Sn, and a compound containing such a metal element are known to be able to occlude many lithium ions per unit volume compared with carbon materials such as graphite. Thus, using these materials for a negative electrode active material may attempt to increase a battery capacity. Commonly, from the viewpoints of charge-discharge cycle characteristics of the battery and the like, the metal such as Si is preferably used as the compound containing the metal such as Si rather than using the metal such as Si as it is. In addition, a negative electrode using a carbon material and a Si-containing compound in combination as a negative electrode active material is also known.

For example, Patent Literature 1 discloses a negative electrode for a non-aqueous electrolyte secondary battery having a mixture layer composed of alternately one-by-one stacking at least: a first layer including a first active material that can reversibly occlude and release lithium; and a second layer including a second active material that can reversibly form an alloy with lithium, wherein the first layer fills a hole formed on the second layer, and a mixed layer is formed on an interface between the two layers. Patent Literature 1 describes that using this negative electrode improves the cycle characteristics of the battery.

CITATION LIST

PATENT LITERATURE

PATENT LITERATURE 1: Japanese Unexamined Patent Application Publication No. 2015-179575

SUMMARY

TECHNICAL PROBLEM

Since the compound containing the metal such as Si undergoes a large volumetric change with charge and discharge, a battery using this compound as the negative electrode active material has a problem of deterioration of charge-discharge cycle characteristics caused by the volumetric change. The art of Patent Literature 1 may not sufficiently inhibit the volumetric change (expansion rate) of the negative electrode, and still has room for improvement of the cycle characteristics.

It is an object of the present disclosure to provide a negative electrode for a non-aqueous electrolyte secondary battery using a negative electrode active material with a high capacity, the negative electrode improving the charge-discharge cycle characteristics of the battery.

SOLUTION TO PROBLEM

A negative electrode for a non-aqueous electrolyte secondary battery of an aspect of the present disclosure is a negative electrode for a non-aqueous electrolyte secondary battery, comprising: a negative electrode core; and a negative electrode mixture layer provided on a surface of the negative electrode core, wherein the negative electrode mixture layer has: a first layer including: at least one of the group consisting of at least one metal element selected from the group consisting of Si, Sn, Sb, Mg, and Ge, and a compound containing the metal element; greater than or equal to 3 mass% and less than or equal to 10 mass% of a multiwall carbon nanotube; and greater than or equal to 6 mass% and less than or equal to 18 mass% of a binder; and a second layer including a graphite A having a particle fracture strength of greater than or equal to 10 MPa and less than or equal to 35 MPa.

A negative electrode for a non-aqueous electrolyte secondary battery of an aspect of the present disclosure is a negative electrode for a non-aqueous electrolyte secondary battery, comprising: a negative electrode core; and a negative electrode mixture layer provided on a surface of the negative electrode core, wherein the negative electrode mixture layer has: a first layer including: at least one of the group consisting of at least one metal element selected from the group consisting of Si, Sn, Sb, Mg, and Ge, and a compound containing the metal element; greater than or equal to 0.2 mass% and less than or equal to 0.7 mass% of a single-wall carbon nanotube; and greater than or equal to 6 mass% and less than or equal to 18 mass% of a binder; and a second layer including a graphite A having a particle fracture strength of greater than or equal to 10 MPa and less than or equal to 35 MPa.

A non-aqueous electrolyte secondary battery of an aspect of the present disclosure comprises: the above negative electrode; a positive electrode; and a non-aqueous electrolyte.

ADVANTAGEOUS EFFECT OF INVENTION

According to the negative electrode for a non-aqueous electrolyte secondary battery of an aspect of the present disclosure, the charge-discharge cycle characteristics of the battery can be improved.

BRIEF DESCRIPTION OF DRAWINGS

FIG. 1 is a sectional view of a non-aqueous electrolyte secondary battery of an example of an embodiment.
FIG. 2 is a sectional view of a negative electrode of an example of an embodiment.

DESCRIPTION OF EMBODIMENTS

The present inventors have made intensive investigation to solve the above problem, and consequently have found that using a negative electrode comprising a multilayer-structured negative electrode mixture layer having: a first layer including at least one of a metal element that forms an alloy with lithium, such as Si, and a compound containing the metal element, a predetermined amount of carbon nanotube, and a predetermined amount of a binder; and a second layer including a graphite A having a particle fracture strength of greater than or equal to 10 MPa and less than or equal to 35 MPa specifically improves the charge-discharge cycle characteristics of the battery. A porosity of the first layer is preferably controlled within greater than or equal to 50% and less than or equal to 65%. The negative electrode of an aspect of the present disclosure has a feature of a high capacity yet a small expansion rate with charge and discharge.

Since the first layer has a void appropriate for absorbing expansion of the compound containing the metal such as Si, it is considered that the expansion rate may be reduced with keeping the high capacity. Using predetermined amounts of the carbon nanotube and binder may form the void appropriate for reducing the expansion rate in the first layer. In addition, using the graphite A for the second layer allows the graphite A to be appropriately crushed during manufacture of the negative electrode to increase a filling density of the active material in the second layer, and the high capacity is ensured. In particular, using the graphite A and a graphite B having a BET specific surface area of greater than or equal to 0.5 $m^2$/g and less than or equal to 2.5 $m^2$/g in combination not only yields the high capacity and good cycle characteristics but also improves storage characteristics at high temperature of the battery. Furthermore, using the negative electrode in which the second layer and the first layer are disposed in this order from a side of the negative electrode core of the negative electrode mixture layer effectively improves charge characteristics of the battery.

Hereinafter, an example of embodiments of the negative electrode according to the present disclosure and the non-aqueous electrolyte secondary battery using the negative electrode will be described in detail with reference to Drawings. Note that, the present disclosure includes selectively combining a plurality of embodiments and modified examples described below.

Hereinafter, a cylindrical battery in which a wound electrode assembly 14 is housed in a bottomed cylindrical exterior housing can 16 will be exemplified, but the exterior of the battery is not limited to a cylindrical exterior housing can, and may be, for example, a rectangular exterior housing can (rectangular battery), a coin-shaped exterior housing can (coin-shaped battery), or an exterior composed of laminated sheets including a metal layer and a resin layer (laminated battery). The electrode assembly may be a stacked electrode assembly in which a plurality of positive electrodes and a plurality of negative electrodes are alternately stacked with a separator interposed therebetween.

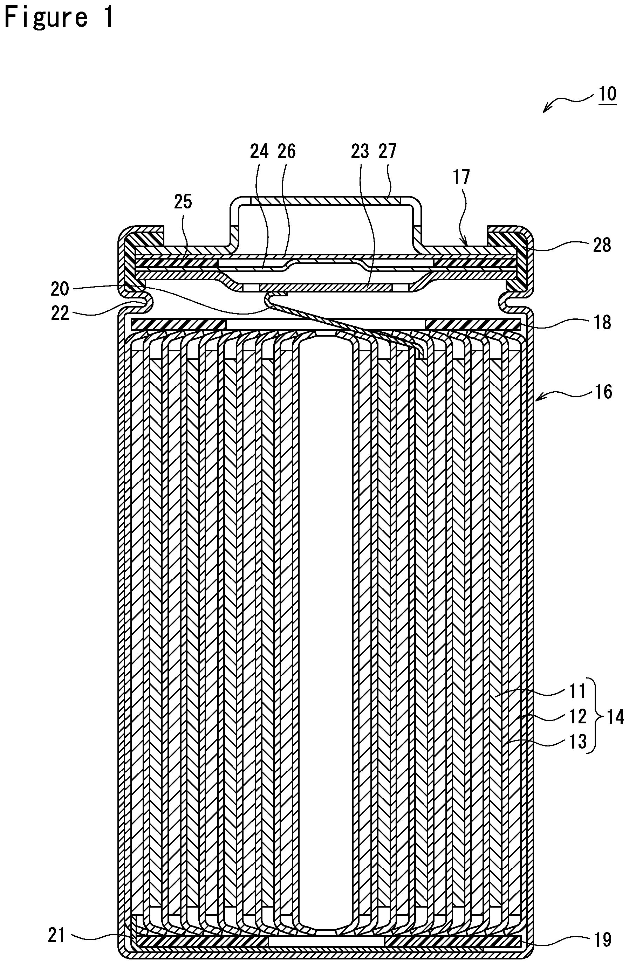

FIG. 1 is a view schematically illustrating a cross section of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metallic container having an opening on one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, a mixed solvent of two or more thereof, and the like are used, for example. The non-aqueous solvent may contain a halogen-substituted derivative in which hydrogen of these solvents is at least partially replaced with a halogen atom such as fluorine. An example of the non-aqueous solvent is ethylene carbonate (EC), ethyl methyl carbonate (EMC), dimethyl carbonate (DMC), a mixed solvent thereof, or the like. For the electrolyte salt, a lithium salt such as $LiPF_6$ is used, for example. The non-aqueous electrolyte is not limited to a liquid electrolyte but may be a solid electrolyte.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two separators 13 are formed to be one size larger than at least the positive electrode 11, and disposed to sandwich the positive electrode 11. The electrode assembly 14 has a positive electrode lead 20 connected to the positive electrode 11 by welding or the like and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

The exterior housing can 16 is a bottomed cylindrical metallic container having an opening on one side in an axial direction, as noted above. A gasket 28 is provided between the exterior housing can 16 and the sealing assembly 17, thereby sealability inside the battery and insulation between the exterior housing can 16 and the sealing assembly 17 are ensured. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure increases due to battery abnormality, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the positive electrode 11, the negative electrode 12, and the separator 13, which constitute the non-aqueous electrolyte secondary battery 10, specifically the negative electrode 12, will be described in detail.

[Positive Electrode]

The positive electrode 11 has a positive electrode core and a positive electrode mixture layer provided on a surface of the positive electrode core. For the positive electrode core, a foil of a metal stable within a potential range of the positive electrode 11, such as aluminum and an aluminum alloy, a film in which such a metal is disposed on a surface layer thereof, and the like may be used. The positive electrode mixture layer includes a positive electrode active material, a conductive agent, and a binder, and is preferably provided on both surfaces of the positive electrode core except for a core exposed portion to which a positive electrode lead is to be connected. A thickness of the positive electrode mixture layer is, for example, greater than or equal to 50 $\mu$m and less than or equal to 150 $\mu$m on one side of the positive electrode core. The positive electrode 11 may be produced by applying a positive electrode mixture slurry including the positive electrode active material, the conductive agent, the binder, and the like on the surface of the positive electrode core, and drying and subsequently compressing the coating to form the positive electrode mixture layers on both the surfaces of the positive electrode core.

The positive electrode active material is constituted with a lithium-transition metal composite oxide as a main component. Examples of an element contained in the lithium-transition metal composite oxide and excluding Li include Ni, Co, Mn, Al, B, Mg, Ti, V, Cr, Fe, Cu, Zn, Ga, Sr, Zr, Nb, In, Sn, Ta, W, Si, and P. An example of the preferable lithium-transition metal composite oxide is a composite oxide containing at least one of Ni, Co, and Mn. Specific examples thereof include a lithium-transition metal composite oxide containing Ni, Co, and Mn, and a lithium-transition metal composite oxide containing Ni, Co, and Al.

Examples of the conductive agent included in the positive electrode mixture layer include a carbon material such as carbon black, acetylene black, Ketjenblack, and graphite. Examples of the binder included in the positive electrode mixture layer include a fluororesin such as polytetrafluoroethylene (PTFE) and polyvinylidene fluoride (PVdF), polyacrylonitrile (PAN), a polyimide resin, an acrylic resin, and a polyolefin resin. With these resins, a cellulose derivative such as carboxymethylcellulose (CMC) or a salt thereof, polyethylene oxide (PEO), and the like may be used in combination.

[Negative Electrode]

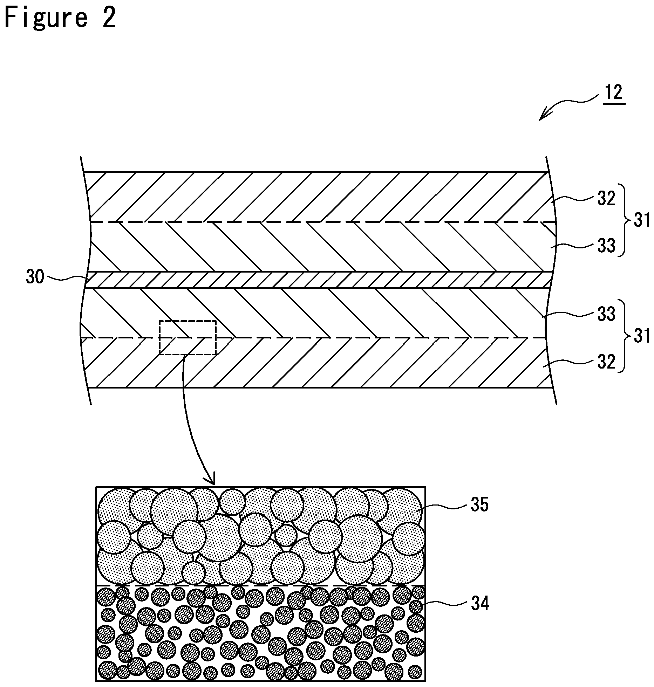

FIG. 2 is a sectional view of the negative electrode 12. As illustrated in FIG. 2, the negative electrode 12 has a negative electrode core 30 and a negative electrode mixture layer 31 provided on a surface of the negative electrode core 30. For the negative electrode core 30, a foil of a metal stable within a potential range of the negative electrode, such as copper and a copper alloy, a film in which such a metal is disposed on a surface layer thereof, and the like may be used. The negative electrode mixture layer 31 is preferably provided on both surfaces of the negative electrode core 30 except for a core exposed portion (not illustrated) to which a negative electrode lead is to be connected. A thickness of the negative electrode mixture layer 31 is, for example, greater than or equal to 50 $\mu$m and less than or equal to 150 $\mu$m on one side of the negative electrode core 30.

The negative electrode mixture layer 31 has a first layer 32 including a Si-containing compound 34 and a second layer 33 including a graphite 35. During charge of the battery, Si in the Si-containing compound 34 forms an alloy with lithium, and the graphite 35 occludes lithium. Both the Si-containing compound 34 and the graphite 35 function as a negative electrode active material. The first layer 32 may include, as the negative electrode active material, at least one of the group consisting of at least one metal element selected from the group consisting of Si, Sn, Sb, Mg, and Ge, and a compound containing the metal element. In the present embodiment, the Si-containing compound 34 will be exemplified as the negative electrode active material in the first layer 32, but the first layer 32 may include another metal element or a compound thereof in addition to the Si-containing compound 34 or instead of the Si-containing compound 34. Although a detail will be described later, the graphite 35 is a graphite A having a particle fracture strength of at least greater than or equal to 10 MPa and less than or equal to 35 MPa.

The first layer 32 includes the Si-containing compound 34, greater than or equal to 3 mass% and less than or equal to 10 mass% of multiwall carbon nanotube (MWCNT), and greater than or equal to 6 mass% and less than or equal to 18 mass% of a binder. Alternatively, the first layer 32 includes greater than or equal to 0.2 mass% and less than or equal to 0.7 mass% of single-wall carbon nanotube (SWCNT), and greater than or equal to 6 mass% and less than or equal to 18 mass% of a binder. The first layer 32 may include at least one of MWCNT and SWCNT. Adding the predetermined amounts of the CNT and binder in addition to the Si-containing compound 34 may control the porosity of the first layer 32 within an appropriate range without isolating the Si-containing compound 34 from a conductive path, and reduces the expansion rate of the negative electrode 12. The second layer 33 is a layer including, for example, the graphite 35 (graphite A) and the binder, and filled with the graphite 35 at a high density.

Although the negative electrode mixture layer 31 may have a layered structure in which the first layer 32 and the second layer 33 are disposed in this order from the negative electrode core 30 side, the negative electrode mixture layer 31 preferably has a layered structure in which the second layer 33 and the first layer 32 are disposed in this order from the negative electrode core 30 side, as illustrated in FIG. 2. That is, the second layer 33 is preferably formed on the negative electrode core 30, and the first layer 32 is preferably formed on the second layer 33. When the latter layered structure is used, the charge characteristics of the battery is improved compared with the former layered structure. Since the first layer 32 has a higher porosity than the second layer 33, it is considered that disposing the first layer 32 on a surface side of the negative electrode mixture layer 31 improves permeability of the electrolyte liquid into the negative electrode mixture layer 31, and improves the charge characteristics.

In the example illustrated in FIG. 2, there is no region where the Si-containing compound 34 and the graphite 35 are mixed on an interface between the first layer 32 and the second layer 33 and a proximity thereof. Although the first layer 32 may include the graphite 35 and the second layer 33 may include the Si-containing compound 34, the first layer 32 preferably includes substantially no graphite 35 and the second layer 33 preferably includes substantially no Si-containing compound 34 in order to separate functions of each layer and more effectively improve the cycle characteristics. In the negative electrode mixture layer 31, a layer other than the first layer 32 and the second layer 33 may be provided within a range not impairing an object of the present disclosure.

The negative electrode mixture layer 31 may be formed by using: a first negative electrode mixture slurry including the Si-containing compound 34, CNT, and the binder; and a second negative electrode mixture slurry including the graphite 35 and the binder. For example, the negative electrode 12 comprising the bilayer-structured negative electrode mixture layer 31 may be manufactured by: applying the second negative electrode mixture slurry on a surface of the negative electrode core 30; drying the first layer of coating; then, applying the first negative electrode mixture slurry on this coating; drying the second layer of coating; and collectively compressing the two layers with a roller. It is also possible that only the first layer of coating to be the second layer 33 is compressed, and then the second layer of coating to be the first layer 32 is formed.

A ratio of thicknesses of the first layer 32 and the second layer 33 is not particularly limited. An example of the thickness of the first layer 32 is, for example, greater than or equal to 20% and less than or equal to 80%, greater than or equal to 25% and less than or equal to 60%, or greater than or equal to 30% and less than or equal to 50%, relative to a total thickness of the first layer 32 and the second layer 33. The thicknesses of the first layer 32 and the second layer 33 may be substantially the same. The first layer 32 and the second layer 33 include, for example, a same binder. Note that, the first layer 32 has preferably a higher content rate of the binder in each of the layers. The content rate of the binder in the first layer 32 on a mass basis is, for example, greater than or equal to 3 times and less than or equal to 18 times, or greater than or equal to 6 times and less than or equal to 15 times, of the content rate of the binder in the second layer 33 on a mass basis.

The porosity of the first layer 32 is higher than the porosity of the second layer 33, as noted above. The void in the negative electrode mixture layer 31 is a space where there is no solid such as the negative electrode active material, the conductive agent, and the binder, and mainly formed between the particles of the negative electrode active material. The porosity of each layer, which means a proportion of a volume of the void in a volume of each layer, is calculated by the following formula.

$$\text{Porosity of Each Layer} = [\text{Apparent Volume of Each Layer - Total Volume of}$$

$$\text{Material Constituting Each Layer}] / \text{Apparent Volume of Each Layer}$$

The apparent volume is calculated from a mass of each layer and a true density of the constituting material.

The porosity of the first layer 32 is, for example, greater than or equal to 40% and less than or equal to 70%, preferably greater than or equal to 50% and less than or equal to 65%, or greater than or equal to 50% and less than or equal to 60%. The porosity of the first layer 32 within the above range may sufficiently reduce the expansion rate with keeping the capacity of the negative electrode 12, and may achieve the high capacity and the good cycle characteristics at higher degree. Using the predetermined amounts of CNT and binder and, as necessary, regulating a compressive force for the above coating may control the porosity of the first layer 32 within the appropriate range. Although the predetermined amounts of the CNT and binder may not be added and the compressive force for the coating may be decreased to increase the porosity, the effect of improving the cycle characteristics may not be obtained in this case. The second layer 33 has less void than the first layer 32, and its porosity is, for example, less than or equal to 35%, and preferably greater than or equal to 15% and less than or equal to 30%.

The Si-containing compound 34 included in the first layer 32 is of, for example, smaller particles than the graphite 35 included in the second layer 33. An example of a median diameter (D50) on a volumetric basis of the Si-containing compound 34 is greater than or equal to 1 $\mu$m and less than or equal to 15 $\mu$m, or greater than or equal to 3 $\mu$m and less than or equal to 10 $\mu$m. The D50 means a particle diameter at which a cumulative frequency is 50% from a smaller particle diameter side in a particle size distribution on a volumetric basis. The particle size distribution may be measured by using a laser diffraction-type particle size distribution measuring device (for example, MT3000II, manufactured by MicrotracBEL Corp.) with water as a dispersion medium. An example of D50 of the graphite 35 is greater than or equal to 5 $\mu$m and less than or equal to 30 $\mu$m, or greater than or equal to 10 $\mu$m and less than or equal to 25 $\mu$m.

Examples of the Si-containing compound 34 include: a compound (SiO) containing a silicon oxide phase and Si dispersed in the silicon oxide phase; a compound (LixSiOy composition) containing a lithium silicate phase and Si dispersed in the lithium silicate phase; and a compound (Si-C) containing a carbon phase and Si dispersed in the carbon phase. Into the first layer 32, one kind of the Si-containing compound 34 may be added, or two or more kinds of the Si-containing compounds 34 may be added. On particle surfaces of the Si-containing compound 34, a conductive layer constituted with a highly conductive material may be formed. An example of the preferable conductive layer is a carbon coating constituted with a carbon material. A content of the Si-containing compound 34, although slightly differs depending on the kind of CNT, and the like, is greater than or equal to 73 mass% and less than or equal to 93 mass% relative to a mass of the first layer 32, for example.

SiO has a particle structure in which the fine Si particles are dispersed in the silicon oxide phase. A preferable SiO has a sea-island structure in which the fine Si particles are substantially uniformly dispersed in an amorphous silicon oxide matrix, and is represented by the general formula $SiO_x$ ($0 < x \leq 2$). The silicon oxide phase is constituted with aggregation of finer particles than the Si particles. A content rate of Si particles is preferably greater than or equal to 35 mass% and less than or equal to 75 mass% relative to a total mass of SiO from the viewpoints of achievement of both the battery capacity and cycle characteristics, and the like.

The LixSiOy composition has a particle structure in which the fine Si particles are dispersed in the lithium silicate phase. A preferable LixSiOy composition has a sea-island structure in which the fine Si particles are substantially uniformly dispersed in a lithium silicate matrix. The lithium silicate phase is constituted with aggregation of finer particles than the Si particles. A content rate of the Si particles is, as in the case of SiO, preferably greater than or equal to 35 mass% and less than or equal to 75 mass% relative to a total mass of the LixSiOy composition. An average particle diameter of the Si particles is, for example, less than or equal to 500 nm, preferably less than or equal to 200 nm, or less than or equal to 50 nm, before charge and discharge.

The lithium silicate phase is preferably constituted with a compound represented by the general formula $Li_{2z}SiO_{(2+z)}$ (0 < z < 2). That is, the lithium silicate phase does not include $Li_4SiO_4$ (Z=2). $Li_4SiO_4$, which is an unstable compound, reacts with water and exhibits alkalinity, and therefore may modify Si, resulting in deterioration of the charge-discharge capacity. The lithium silicate phase preferably contains $Li_2SiO_3$ (Z=1) or $Li_2Si_2O_5$ (Z=1/2) as a main component from the viewpoints of stability, production easiness, lithium ion conductivity, and the like. When $Li_2SiO_3$ or $Li_2Si_2O_5$ is a main component, a content of the main component is preferably greater than 50 mass%, and more preferably greater than or equal to 80 mass%, relative to a total mass of the lithium silicate phase.

Si-C has a particle structure in which the fine Si particles are dispersed in the carbon phase. A preferable Si-C has a sea-island structure in which the fine Si particles are substantially uniformly dispersed in a carbon phase matrix. A content of the Si particles is preferably greater than or equal to 30 mass% and less than or equal to 80 mass%, and more preferably greater than or equal to 35 mass% and less than or equal to 75 mass%, relative to a total mass of the Si-C from the viewpoints of increasing the capacity, and the like. A preferable average particle diameter of the Si particles is typically less than or equal to 500 nm, preferably less than or equal to 200 nm, and more preferably less than or equal to 100 nm, before charge and discharge. After charge and discharge, the average particle diameter is preferably less than or equal to 400 nm, and more preferably less than or equal to 100 nm.

The carbon coating is constituted with, for example, carbon black, acetylene black, Ketjenblack, graphite, and a mixture of two or more thereof. Examples of a method for carbon-coating the particle surfaces of the Si-containing compound 34 include: a CVD method using acetylene, methane, or the like; and a method of mixing coal pitch, petroleum pitch, a phenol resin, or the like with the particles of the Si-containing compound 34 to be subjected to heat treatment. A carbon powder such as carbon black may adhere onto the particle surface using a binder to form the carbon coating. A thickness of the carbon coating is preferably greater than or equal to 1 nm and less than or equal to 200 nm, or greater than or equal to 5 nm and less than or equal to 100 nm, considering ensuring the conductivity and diffusibility of lithium ions toward the particle inside.

The first layer 32 includes CNT, as noted above. CNT functions as a conductive agent, and forms a good conductive path in the first layer 32 to contribute to reduction in resistance of the first layer 32. CNT also plays an important role of controlling the porosity of the first layer 32. The first layer 32 may include, in addition to CNT: particle conductive agents such as carbon black, acetylene black, Ketjenblack, and graphite; fibrous conductive agents such as vapor-grown carbon fiber (VGCF), electrospinning carbon fiber, polyacrylonitrile (PAN)-based carbon fiber, pitch-based carbon fiber, and graphene; and the like within a range not impairing an object of the present disclosure.

CNT may be any of the multiwall CNT (MWCNT) and the single-wall CNT (SWCNT), and both of SWCNT and MWCNT may be added into the first layer 32. Note that, the addition amount is necessarily changed according to the kind of CNT. For MWCNT, CNT with a tubular structure in which graphene sheets composed of six-membered carbon rings are wound parallel to a fiber axis, CNT with a platelet structure in which graphene sheets composed of six-membered carbon rings are arranged perpendicular to a fiber axis, CNT with a herringbone structure in which graphene sheets composed of six-membered carbon rings are wound with oblique angle to a fiber axis, and the like may be used, for example.

In the case of MWCNT, an average diameter thereof is, for example, less than or equal to 20 nm, preferably less than or equal to 15 nm, and more preferably less than or equal to 10 nm. In the case of SWCNT, an average diameter thereof is, for example, greater than or equal to 1 nm and less than or equal to 3 nm. The average diameter of CNT (MWCNT or SWCNT) within the above range enhances the effect of improving the cycle characteristics compared with a case where CNT having an average diameter out of the above range is used.

An average fiber length of CNT is, for example, greater than or equal to 0.5 $\mu$m, preferably greater than or equal to 0.7 $\mu$m, more preferably greater than or equal to 0.8 $\mu$m, or greater than or equal to 1 $\mu$m. An upper limit of the average fiber length of CNT is not particularly limited, and an example thereof is 10 $\mu$m or 5 $\mu$m. An example of a preferable range of the average fiber length of CNT is greater than or equal to 1 $\mu$m and less than or equal to 10 $\mu$m, or greater than or equal to 1 $\mu$m and less than or equal to 5 $\mu$m. The average fiber length of CNT within the above range enhances the effect of improving the cycle characteristics compared with a case where CNT having an average fiber length out of the above range is used. The average diameter and average fiber length of CNT is determined by measuring diameters and fiber lengths of 100 CNTs selected from a cross-sectional image of the first layer 32 to average these measured values, respectively.

A content of MWCNT is greater than or equal to 3 mass% and less than or equal to 10 mass%, and more preferably greater than or equal to 3 mass% and less than or equal to 7 mass%, relative to the mass of the first layer 32. The content of MWCNT within the above range may control the porosity of the first layer 32 within the above appropriate range to improve the cycle characteristics of the battery. For example, if the content of MWCNT is less than 3 mass%, the effect of improving the cycle characteristics of the battery is considerably deteriorated. If the content is greater than 10 mass%, the capacity density of the negative electrode 12 considerably decreases. When SWCNT is used, a content thereof is greater than or equal to 0.2 mass% and less than or equal to 0.7 mass%, and more preferably greater than or equal to 0.3 mass% and less than or equal to 0.7 mass%, relative to the mass of the first layer 32. As in the case of MWCNT, the content of SWCNT within the above range may control the porosity of the first layer 32 within the above appropriate range to improve the cycle characteristics of the battery.

For the binder included in the first layer 32, a fluororesin, PAN, a polyimide, an acrylic resin, a polyolefin, and the like may be used as in the case of the positive electrode 11, but styrene-butadiene rubber (SBR) is particularly preferably used. The first layer 32 may further include CMC or a salt thereof, polyacrylic acid (PAA) or a salt thereof, polyvinyl alcohol (PVA), and the like. For the binder of the first layer 32, SBR; and CMC or a salt thereof, or PAA or a salt thereof are preferably used in combination.

A content of the binder is greater than or equal to 6 mass% and less than or equal to 18 mass%, and more preferably greater than or equal to 10 mass% and less than or equal to 15 mass%, relative to the mass of the first layer 32. When two or more kinds of the binders are used, the total mass is regulated within the above range. The content of the binder within the above range may control the porosity of the first layer 32 within the above appropriate range to improve the cycle characteristics of the battery. For example, if the content of the binder is less than 6 mass%, the effect of improving the cycle characteristics of the battery is considerably deteriorated. If the content is greater than 18 mass%, the capacity density of the negative electrode 12 considerably decreases.

The second layer 33 includes the graphite 35 and the binder, as noted above. For the second layer 33, the conductive agent such as CNT is unnecessary. The graphite 35 is, for example, a natural graphite such as spherical graphite and flake graphite, or an artificial graphite such as massive artificial graphite and graphitized mesophase-carbon microbead. The graphite 35 includes a graphite A having a particle fracture strength of at least greater than or equal to 10 MPa and less than or equal to 35 MPa. Since the graphite A is appropriately crushed during the manufacture of the negative electrode 12, the filling density of the active material in the second layer 33 is increased to ensure the high capacity. The second layer 33 may include two or more kinds of graphite, and for example, may include the graphite A and a graphite B having a BET specific surface area of greater than or equal to 0.5 $m^2$/g and less than or equal to 2.5 $m^2$/g. In this case, the effect of improving the cycle characteristics becomes more remarkable, and the storage characteristics at high temperature is also improved.

The graphite A is, for example spheroidized natural graphite having D50 of greater than or equal to 10 $\mu$m and less than or equal to 25 $\mu$m. An example of a BET specific surface area of the graphite A, which is larger than the BET specific surface area of the graphite B, is greater than or equal to 3 $m^2$/g and less than or equal to 7 $m^2$/g, or greater than or equal to 4 $m^2$/g and less than or equal to 6 $m^2$/g. The BET specific surface area of the graphite is measured in accordance with a BET method (nitrogen adsorption method) described in JIS R1626.

A particle fracture strength of the graphite A is greater than or equal to 10 MPa and less than or equal to 35 MPa, and more preferably greater than or equal to 15 MPa and less than or equal to 30 MPa. The particle fracture strength within the above range may achieve both of the high capacity and the good cycle characteristics. The compressive fracture strength of the graphite A is measured by using a micro compression tester ("MCT-W201", manufactured by SHIMADZU CORPORATION) under the following condition. Measured with the micro compression tester are a deformation amount and load of one graphite particle when a load is applied to the particle at the following loading rate. Then, a load (N) at which the particle is deformed to reach its fracture point (a point where the displacement suddenly begins to increase) and a particle diameter (particle diameter measured with a CCD camera) of the particle before the deformation are substituted in the following formula to calculate the compressive fracture strength.

$$\text{Compressive Fracture Strength (MPa)} = 2.8 \times \text{Load (N)} / \{\pi \times (\text{Particle Diameter (mm)})^2\}$$

<Measurement Condition of Compressive Strength>

Test temperature: Normal temperature (25°C)
Upper pressuring indenter: Plane indenter with 50 $\mu$m in diameter (material: diamond)

Lower pressuring plate: SKS plane plate
Measurement mode: Compression test
Test load: minimum 10 mN, maximum 50 mN
Loading rate: minimum 0.178 mN/sec, minimum 0.221 mN/sec
Displacement full scale: 10 $\mu$m

The graphite B is, for example, artificial graphite having D50 of greater than or equal to 10 $\mu$m and less than or equal to 25 $\mu$m. The D50 of the graphite B may be larger than or smaller than the D50 of the graphite A. A BET specific surface area of the graphite B is greater than or equal to 0.5 $m^2$/g and less than or equal to 2.5 $m^2$/g, and more preferably greater than or equal to 0.7 $m^2$/g and less than or equal to 1.5 $m^2$/g. The BET specific surface area within the above range may yield good storage characteristics at high temperature. A particle fracture strength of the graphite B is larger than the particle fracture strength of the graphite A, and an example thereof is greater than or equal to 100 MPa and less than or equal to 200 MPa.

When the graphites A and B are used in combination, a proportion of the graphite A to the total mass of the graphites A and B is preferably greater than or equal to 25 mass% and less than or equal to 75 mass%, and more preferably greater than or equal to 30 mass% and less than or equal to 60 mass%. The mass ratio between the graphites A and B may be substantially 1: 1. A content of the graphite 35 is, for example, greater than or equal to 97 mass% and less than or equal to 99.5 mass%, or greater than or equal to 95 mass% and less than or equal to 99 mass%, relative to the mass of the second layer 33. For the binder in the second layer 33, those same as the binder in the first layer 32 may be applied. A content of the binder is, for example, greater than or equal to 0.5 mass% and less than or equal to 3 mass%, or greater than or equal to 0.7 mass% and less than or equal to 1.5 mass%, relative to the mass of the second layer 33.

[Separator]

For the separator 13, a porous sheet having an ion permeation property and an insulation property is used. Specific examples of the porous sheet include a fine porous thin film, a woven fabric, and a nonwoven fabric. As a material for the separator 13, a polyolefin such as polyethylene, polypropylene, and a copolymer of ethylene and an $\alpha$-olefin, cellulose, and the like are preferable. The separator 13 may have any of a single layer structure and a stacked structure. On a surface of the separator 13, a heat-resistant layer including inorganic particles, a heat-resistant layer constituted with a highly heat-resistant resin such as an aramid resin, a polyimide, and a polyamide imide, and the like may be formed.

EXAMPLES

Hereinafter, the present disclosure will be further described with Examples, but the present disclosure is not limited to these Examples.

<Example 1>

[Production of Positive Electrode]

As a positive electrode active material, a lithium-transition metal composite oxide represented by $LiCo_{1/3}Mn_{1/3}Ni_{1/3}O_2$ was used. Mixing 98 parts by mass of the positive electrode active material, 1 part by mass of acetylene black, and 1 part by mass of polyvinylidene fluoride was performed, and N-methyl-2-pyrrolidone (NMP) was used as a dispersion medium to prepare a positive electrode mixture slurry. Then, this positive electrode mixture slurry was applied on both surfaces of a positive electrode core made of aluminum foil, the coating was dried and compressed, and then cut to a predetermined electrode size to produce a positive electrode in which positive electrode mixture layers were formed on both the surfaces of the positive electrode core. An exposed portion where the core surface was exposed was provided at a central portion in a longitudinal direction of the positive electrode, and a positive electrode lead was welded to this exposed portion.

[Preparation of First Negative Electrode Mixture Slurry]

As a negative electrode active material, a Si-containing compound (LixSiOy composition) in which Si particles were dispersed in a lithium silicate phase containing $Li_2Si_2O_5$ as a main component was used. The Si-containing compound had D50 of 10 $\mu$m. The Si-containing compound, multiwall carbon nanotube (MWCNT) having an average diameter of 10 nm and an average fiber length of 1 $\mu$m, sodium carboxymethylcellulose (CMC-Na), and a dispersion of styrene-butadiene rubber (SBR) were mixed at a solid content mass ratio of 83:5:6:6, and water was used as a dispersion medium to prepare a first negative electrode mixture slurry.

[Preparation of Second Negative Electrode Mixture Slurry]

As a negative electrode active material, a spheroidized natural graphite having a particle fracture strength of 25 MPa, D50 of 20 $\mu$m, and a BET specific surface area of 5 m$^2$/g was used. The spheroidized natural graphite, CMC-Na, and a dispersion of SBR were mixed at a solid content mass ratio of 98:1:1, and water was used as a dispersion medium to prepare a second negative electrode mixture slurry.

[Production of Negative Electrode]

The first negative electrode mixture slurry was applied on both surfaces of a negative electrode core made of copper foil, the first layer of coating was dried and compressed, then the second negative electrode mixture slurry was applied on this coating, and the second layer of coating was dried and compressed. At this time, each slurry was applied so that a ratio of thicknesses between the first layer including the Si-containing compound and the second layer including the graphite A was 1:2. Thereafter, the product was cut to a predetermined electrode size to produce a negative electrode having a bilayer-structured negative electrode mixture layer in which the first layer (underlayer) and the second layer (upper layer) were formed in this order from the core side on both the surfaces of the negative electrode core. An exposed portion where the core surface was exposed was provided at an end portion in a longitudinal direction of the negative electrode, and a negative electrode lead was welded to this exposed portion. The first layer had a porosity of 55%.

[Preparation of Non-Aqueous Electrolyte Liquid]

Into a mixed solvent in which ethylene carbonate (EC) and ethyl methyl carbonate (EMC) were mixed at a mass ratio of 1:3, LiPF$_6$ was dissolved at a concentration of 1 mol/L to prepare a non-aqueous electrolyte liquid.

[Production of Test Cell]

A lead made of aluminum was attached to the exposed portion of the positive electrode, and a lead made of nickel was attached to the predetermined position of the negative electrode. The positive electrode and the negative electrode were spirally wound with a separator made of a polyolefin interposed therebetween to produce a wound electrode assembly. This electrode assembly was housed in a bottomed cylindrical exterior housing can, the non-aqueous electrolyte was injected thereinto, and then a sealing assembly was attached to an opening of the exterior housing can via a gasket to produce a cylindrical test cell.

<Example 2>

A negative electrode and a test cell were produced in the same manner as in Example 1 except that, in the preparation of the first negative electrode mixture slurry, SWCNT was added instead of MWCNT, and the Si-containing compound, SWCNT, CMC-Na, and the dispersion of SBR were mixed at a solid content mass ratio of 87.5:0.5:6:6.

<Example 3>

A negative electrode and a non-aqueous electrolyte secondary battery were produced in the same manner as in Example 1 except that the applying order of the first and second negative electrode mixture slurries was changed to form a bilayer-structured negative electrode mixture layer in which the second layer (underlayer) and the first layer (upper layer) were formed in this order from the negative electrode core side.

<Example 4>

A negative electrode and a non-aqueous electrolyte secondary battery were produced in the same manner as in Example 3 except that, in the preparation of the second negative electrode mixture slurry, a mixture in which the graphites A and B were mixed at a mass ratio of 40:60 was added as the negative electrode active material. The graphite B was an artificial graphite having a particle fracture strength of 150 MPa, D50 of 15 $\mu$m, and a BET specific surface area of 1.0 m$^2$/g.

<Example 5>

A negative electrode and a non-aqueous electrolyte secondary battery were produced in the same manner as in Example 3 except that, in the preparation of the first negative electrode mixture slurry, SWCNT was added, and the Si-containing compound, SWCNT, CMC-Na, and the dispersion of SBR were mixed at a solid content mass ratio of 84.6:0.6:8:7 to regulate the porosity of the first layer to 65%.

<Comparative Example 1>

A negative electrode and a test cell were produced in the same manner as in Example 1 except that: in the preparation of the first negative electrode mixture slurry, no MWCNT was added; and the Si-containing compound, CMC-Na, and the dispersion of SBR were mixed at a solid content mass ratio of 97:1.5:1.5; and the compressive force for the coating in the step of forming the negative electrode mixture layer was regulated so as to weaken the compressive force in Example 1 to regulate the porosity of the first layer to 55%.

<Comparative Example 2>

A negative electrode and a non-aqueous electrolyte secondary battery were produced in the same manner as in Comparative Example 1 except that the compressive force for the coating in the step of forming the negative electrode mixture layer was same as in Example 1.

<Comparative Example 3>

A negative electrode and a test cell were produced in the same manner as in Example 2 except that, in the preparation of the first negative electrode mixture slurry, the Si-containing compound, SWCNT, CMC-Na, and the dispersion of SBR were mixed at a solid content mass ratio of 96.5:0.5:1.5:1.5.

<Comparative Example 4>

A negative electrode and a test cell were produced in the same manner as in Example 2 except that, in the preparation of the first negative electrode mixture slurry, the Si-containing compound, SWCNT, CMC-Na, and the dispersion of SBR were mixed at a solid content mass ratio of 96.9:0.1:1.5:1.5.

An expansion rate of the negative electrode, cycle characteristics, and 2C-charge characteristics of each of the test cells of Examples and Comparative Examples were evaluated by the following methods. Table 1 shows the evaluation results together with the constitution of the negative electrode mixture layer. The evaluation results of the cycle characteristics and 2C-charge characteristics were values relative to evaluation results in Comparative Example 1 as standards (100).

[Evaluation of Expansion Rate of Negative Electrode]

A thickness of the obtained negative electrode plate was measured with a micro gauge to be specified as an initial thickness W1 of the negative electrode. Then, under a temperature environment at 25°C, the produced cell was charged at a constant current of 0.2 It until a battery voltage reached 4.2 V, and charged at a constant voltage of 4.2 V until a current value reached 0.02 It. Thereafter, the negative electrode plate was taken out from the cell, and a thickness in a charged state W2 of the negative electrode was similarly measured. The expansion rate of the negative electrode was determined based on the following formula.

$$\text{Expansion Rate of Negative Electrode} = [(\text{Thickness in Charged State W2 of}$$

$$\text{Negative Electrode - Core Thickness}) / (\text{Initial Thickness W1 of Negative Electrode - Core}$$

$$\text{Thickness})] \times 100$$

[Evaluation of Cycle Characteristics (Capacity Maintenance Rate)]

Under a temperature environment at 25°C, the test cell was charged at a constant current of 0.2 It until a battery voltage reached 4.2 V, and then charged at a constant voltage of 4.2 V until a current value reached 0.02 It. Thereafter, the test cell was discharged at a constant current of 0.2 It until the battery voltage reached 3.0 V. This charge and discharge were performed with 500 cycles, and a capacity maintenance rate in the charge-discharge cycle was determined based on the following formula.

$$\text{Capacity Maintenance Rate} = [\text{Discharge Capacity at 500th Cycle} / \text{Discharge Capacity at 1st Cycle}] \times 100$$

[Evaluation of 2C-Charge Characteristics]

Under a temperature environment at 25°C, the test cell was charged at a constant current of 0.2 It until a battery voltage reached 4.2 V, and then charged at a constant voltage of 4.2 V until a current value reached 0.02 It. Thereafter, the test cell was discharged at a constant current of 0.2 It until the battery voltage reached 2.5 V, and this capacity was specified as a rated capacity. Then, under a temperature environment at 25°C, the test cell was charged at a constant current of 2 It until the battery voltage reached 4.2 V, and a charge capacity thereof was specified as a 2C-charge capacity. A charge depth of the 2C-charge was determined based on the following formula to be specified as an evaluation index of the 2C-charge characteristics.

$$\text{Charge Depth of 2C-Charge} = [\text{2C Charge Capacity} / \text{Rated Capacity}] \times 100$$

[Table 1]

| | First layer | | | | | Second layer | | | Performance evaluation | | |
|---|---|---|---|---|---|---|---|---|---|---|---|
| | CNT | | Binder | | Porosity | Graphite | | Layer structure | Expansion rate | Capacity maintenance rate | Charge characteristics |
| | Kind | Addition amount | Kind | Addition amount | | Kind | Fracture strength | Upper layer / Under layer | | | |
| Example 1 | MW | 5wt% | CMC, SBR | 12wt% | 55% | A | 25MPa | Second / First | 130% | 83% | 50% |
| Example 2 | SW | 0.5wt% | CMC, SBR | 12wt% | 55% | A | 25MPa | Second / First | 130% | 84% | 50% |
| Example 3 | SW | 0.5wt% | CMC, SBR | 12wt% | 55% | A | 25MPa | First / Second | 130% | 84% | 60% |
| Example 4 | SW | 0.5wt% | CMC, SBR | 12wt% | 55% | A, B | 25MPa, 150MPa | First / Second | 130% | 88% | 60% |
| Example 5 | SW | 0.6wt% | CMC, SBR | 15wt% | 65% | A | 25MPa | First / Second | 125% | 85% | 65% |
| Comparative Example 1 | - | - | CMC, SBR | 3wt% | 55% | A | 25MPa | Second / First | 130% | 60% | 50% |
| Comparative Example 2 | - | - | CMC, SBR | 3wt% | 25% | A | 25MPa | Second / First | 200% | 60% | 40% |
| Comparative Example 3 | SW | 0.5wt% | CMC, SBR | 3wt% | 40% | A | 25MPa | Second / First | 150% | 65% | 45% |
| Comparative Example 4 | SW | 0.1wt% | CMC, SBR | 8wt% | 35% | A | 25MPa | Second / First | 165% | 60% | 40% |

As shown in Table 1, any of Examples has a smaller expansion rate of the negative electrode and a higher capacity maintenance rate of the test cell compared with Comparative Examples. When the first layer was the upper layer on the surface side of the mixture layer and the second layer was the underlayer on the core side, the 2C-charge characteristics were remarkably improved (Examples 3 to 5). When the graphite B having a BET specific surface are of 1.0 m$^2$/g was used in combination in the second layer, the capacity maintenance rate was more remarkably improved (Example 4). When CNT was absent in the first layer, the capacity maintenance rate was considerably lowered compared with the case of Examples (Comparative Examples 1 and 2). Even when the porosity of the first layer was regulated to 55%, same as in Examples, the effect of improving the capacity maintenance rate was not obtained (Comparative Example 1). Also, when the addition amount of CNT or the addition amount of the binder in the first layer was not appropriate, the effect of improving the capacity maintenance rate was not obtained (Comparative Examples 3 and 4).

REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Negative electrode core, 31 Negative electrode mixture layer, 32 First layer, 33 Second layer, 34 Si-containing compound, 35 Graphite

**Claims**

1. A negative electrode for a non-aqueous electrolyte secondary battery, comprising:

   a negative electrode core; and
   a negative electrode mixture layer provided on a surface of the negative electrode core, wherein
   the negative electrode mixture layer has:

   a first layer including: at least one of the group consisting of at least one metal element selected from the group consisting of Si, Sn, Sb, Mg, and Ge, and a compound containing the metal element; greater than or equal to 3 mass% and less than or equal to 10 mass% of a multiwall carbon nanotube; and greater than or equal to 6 mass% and less than or equal to 18 mass% of a binder; and
   a second layer including a graphite A having a particle fracture strength of greater than or equal to 10 MPa and less than or equal to 35 MPa.

2. A negative electrode for a non-aqueous electrolyte secondary battery, comprising:

   a negative electrode core; and
   a negative electrode mixture layer provided on a surface of the negative electrode core, wherein
   the negative electrode mixture layer has:

   a first layer including: at least one of the group consisting of at least one metal element selected from the group consisting of Si, Sn, Sb, Mg, and Ge, and a compound containing the metal element; greater than or equal to 0.2 mass% and less than or equal to 0.7 mass% of a single-wall carbon nanotube; and greater than or equal to 6 mass% and less than or equal to 18 mass% of a binder; and
   a second layer including a graphite A having a particle fracture strength of greater than or equal to 10 MPa and less than or equal to 35 MPa.

3. The negative electrode for a non-aqueous electrolyte secondary battery according to claim 1 or 2, wherein a porosity of the first layer is greater than or equal to 50% and less than or equal to 65%.

4. The negative electrode for a non-aqueous electrolyte secondary battery according to any one of claims 1 to 3, wherein the second layer includes the graphite A and a graphite B having a BET specific surface area of greater than or equal to 0.5 m$^2$/g and less than or equal to 2.5 m$^2$/g.

5. The negative electrode for a non-aqueous electrolyte secondary battery according to any one of claims 1 to 4, wherein the second layer and the first layer are disposed in this order from a side of the negative electrode core.

6. A non-aqueous electrolyte secondary battery, comprising:

the negative electrode according to any one of claims 1 to 5;
a positive electrode; and
a non-aqueous electrolyte.

# Figure 1

Figure 2

## INTERNATIONAL SEARCH REPORT

| International application No. |
| --- |
| **PCT/JP2021/048200** |

### A. CLASSIFICATION OF SUBJECT MATTER

*H01M 4/13*(2010.01)i; *H01M 4/133*(2010.01)i; *H01M 4/134*(2010.01)i; *H01M 4/136*(2010.01)i; *H01M 4/36*(2006.01)i; *H01M 4/587*(2010.01)i; *H01M 4/62*(2006.01)i
FI: H01M4/13; H01M4/133; H01M4/134; H01M4/62 Z; H01M4/36 D; H01M4/136; H01M4/587

According to International Patent Classification (IPC) or to both national classification and IPC

### B. FIELDS SEARCHED

Minimum documentation searched (classification system followed by classification symbols)

H01M4/13; H01M4/133; H01M4/134; H01M4/136; H01M4/36; H01M4/587; H01M4/62

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | WO 2019/168376 A1 (CNP SOLUTIONS CO., LTD.) 06 September 2019 (2019-09-06) claims 1-17, paragraphs [0253]-[0260], example 36, table 6 | 1, 3, 5-6 |
| Y | WO 2019/239652 A1 (SANYO ELECTRIC CO) 19 December 2019 (2019-12-19) claims 1-3, paragraph [0013] | 1-3, 5-6 |
| Y | JP 2011-57541 A (SEKISUI CHEMICAL CO LTD) 24 March 2011 (2011-03-24) claims 1-12, paragraph [0084], examples 3, 6 | 1, 3, 5-6 |
| Y | CN 109713367 A (AMPRIUS (NANJING) CO., LTD.) 03 May 2019 (2019-05-03) paragraphs [0048]-[0051], [0086] | 2-3, 5-6 |
| A | KR 10-2015-0121694 A (ILJIN ELECTRIC) 29 October 2015 (2015-10-29) | 1-6 |
| A | CN 109244386 A (GUANGXI ZHUONENG NEW ENERGY SCIENCE & TECHNOLOGY CO., LTD.) 18 January 2019 (2019-01-18) | 1-6 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **21 February 2022** | **08 March 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/048200**

| Patent document cited in search report | | | Publication date (day/month/year) | Patent family member(s) | | | Publication date (day/month/year) |
|---|---|---|---|---|---|---|---|
| WO | 2019/168376 | A1 | 06 September 2019 | US | 2021/0005893 | A1 | |
| | | | | claims 1-17, paragraphs [0218]-[0225], example 36, table 6 | | | |
| | | | | EP | 3761409 | A1 | |
| | | | | KR | 10-2020-0083844 | A | |
| | | | | CN | 111819716 | A | |
| | | | | JP | 2021-518985 | A | |
| | | | | claims 1-17, paragraphs [0220]-[0225], example 36, table 6 | | | |
| WO | 2019/239652 | A1 | 19 December 2019 | US | 2021/0159489 | A1 | |
| | | | | claims 1-3, paragraph [0016] | | | |
| | | | | CN | 112292773 | A | |
| JP | 2011-57541 | A | 24 March 2011 | US | 2011/0278506 | A1 | |
| | | | | claims 1-6, paragraphs [0084]-[0086], examples 2, 4 | | | |
| | | | | WO | 2010/074243 | A1 | |
| | | | | EP | 2383224 | A1 | |
| | | | | CN | 102256897 | A | |
| | | | | KR | 10-2011-0100290 | A | |
| CN | 109713367 | A | 03 May 2019 | (Family: none) | | | |
| KR | 10-2015-0121694 | A | 29 October 2015 | (Family: none) | | | |
| CN | 109244386 | A | 18 January 2019 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015179575 A